# EUROPÄISCHE PATENTSCHRIFT

(11) **EP 0 678 424 B1**
(45) Veröffentlichungstag und Bekanntmachung des Hinweises auf die Patenterteilung: **03.03.1999**
(21) Anmeldenummer: 95104797.6
(22) Anmeldetag: 31.03.1995
(51) Int. Cl.: B60R 13/06, B60R 13/04

(54) **Profilleiste aus polymerem Werkstoff**
Profiled strip made of polymer material
Bande profilée en matériau polymère

(30) Priorität: 15.04.1994 DE 9406335 U
(43) Veröffentlichungstag der Anmeldung: 25.10.1995
(73) Patentinhaber: REHAU AG + Co, 95111 Rehau (DE)
(72) Erfinder: Röder, Bernd, D-95339 Neuenmarkt (DE); Gruber, Steffen, D-97318 Kitzingen (DE)

(56) Entgegenhaltungen:
- EP-A- 0 386 986
- AU-A- 5 381 365
- DE-A- 2 103 344

## Beschreibung

Die Erfindung betrifft eine Profilleiste aus polymerem Werkstoff zur dichtenden Überdeckung der Fugenöffnung von U-förmigen Baufugen an Kraftfahrzeugen, bestehend aus einem Basisbereich und von diesem im wesentlichen senkrecht abragenden Abdeckschenkeln.

Aus der DE 32 25 889 A1 ist eine derartige Profilleiste bekannt, die zum Abdecken des zwischen dem Dach und dem Seitenteil eines Kraftfahrzeuges längsdurchlaufend ausgebildeten Schweißkanals dient. Diese Profilleiste besteht aus zwei Leistenteilen aus Kunststoff, welche schwenkbar an einer gemeinsamen Basis verbunden sind und im Öffnungsbereich über eine mittig längsverlaufende Haken-Feder-Verbindung aufeinander festgelegt werden können. Die beiden Leistenteile decken mit ihren oberen Schenkeln die Nutenöffnung ab.

Die Befestigung der bekannten Profilleiste im Nutengrund erfolgt durch Verklemmen an den Nutenwänden in der Art, daß ein ungewolltes Lösen aus dem Nutensitz nicht mehr möglich ist.

Der Nachteil der bekannten Profilleiste ist darin zu sehen, daß durch die Feder-Haken-Verbindung im Sichtbereich eine in Fahrzeuglängsrichtung verlaufende Schlitzöffnung entsteht, in welche sich Schmutzpartikel einlagern können. Darüber hinaus ist die Montage dieses schwenkbaren und einen Teil der Nutenöffnung im Bedarfsfall freigegebenen Profils aufwendig.

Hier setzt die Neuerung ein, die es sich zur Aufgabe gestellt hat, die Nutenöffnung im Kraftfahrzeug längsverlaufend ohne Schlitzöffnung zu verschließen und dazu einen denkbar einfachen Montageaufwand anzugeben.

Zur Lösung dieser Aufgabe schlägt die Erfindung vor, daß der Basisbereich der Profilleiste ein T-förmiger Trägerkörper ist, von dessen oberen freien Ende die im wesentlichen senkrecht abragenden Abdeckschenkel in einer Ebene verlaufen, daß an den freien Enden der Abdeckschenkel in Richtung zum Trägerkörper abgewinkelte Andruckschenkel und in die Gegenrichtung zur Abwinkelung der Andruckschenkel verlaufende Dichtlippen angeformt sind, und daß am Fuß des Trägerkörpers freigeschnittene Öffnungen vorgesehen sind, in welche die Basis von U-förmigen Halteelementen eingreift, welche bestimmt sind, mit Haltestegen, welche von an den Seitenschenkeln der Basis abragenden Abstandstegen verlaufen, flächige Abdeckungen zu hintergreifen, die von den freien Enden der Andruckschenkel in Richtung zum Trägerkörper abragen.

Die Profilleiste der Erfindung ist ein T-Profil mit oberen Abdeckschenkeln, die rechtwinkelig zum Trägerkörper verlaufen und im wesentlichen gleiche Längenabmessungen aufweisen. An den freien Enden dieser Abdeckschenkel sind einstückig die in Richtung zum Trägerschenkel abgewinkelten Andruckschenkel angeformt. Diese Andruckschenkel können beispielsweise aus einem hart eingestellten Polymer bestehen, während die Abdeckschenkel und der Trägerkörper aus weichem Polymermaterial gestaltet sein können. Dies hat den Vorteil, daß die Profilleiste in sich selbst flexibel ist und so leicht in ihren Sitz in der abzudeckenden Nut verbracht werden kann, ohne daß auf Toleranzprobleme in den Nutenwänden besonders geachtet werden müßte. Der weitere Vorteil dieser Materialunterschiede ist darin zu sehen, daß die Andruckschenkel nach Herstellung des Paßsitzes der Profilleiste in der Nutenöffnung die Anpreßkraft ohne wesentliche Eigenelastizität an die Nutenseitenwände übertragen können.

Die in Gegenrichtung zur Abwinkelung der Andruckschenkel an den freien Enden der Abdeckschenkel angeordneten Dichtlippen sind aus dem weichen Polymermaterial des Profilkörpers. Diese Dichtlippen sind von den Abmessungen her so gehalten, daß sie sich beim Eindrücken der Profilleiste in die Nutenöffnung gegen die Eindrückrichtung bewegen und dichtend an die zugeordneten Seitenwände der Nutenöffnung anlegen.

Der aus weichem Polymermaterial bestehende Grundkörper der Profilleiste kann durch bin eingeformtes Metallteil verstärkt werden.

Das U-förmige Halteelement, über welches die Profilleiste am Grund der Nutenöffnung festgelegt ist, besteht aus der Basis des U-Körpers und von dieser aufragenden, auf Vorspannung zueinander gerichteten Seitenschenkeln. An diese Seitenschenkel sind im wesentlichen senkrecht zur Mittelachse des U-Profils abragende Abstandsstege angeformt, welche an ihren freien Enden in Haltestege auslaufen, die in einem spitzen Winkel zur Achse der Abstandstege nach unten verlaufen.

Das U-förmige Halteelement besteht aus einem Konstruktionswerkstoff, z.B. aus Metall. Dieses Halteelement wird in definierten Abständen in die am Fuß des Trägerkörpers frei geschnittenen Öffnungen derart eingesetzt, daß die Basis des Halteelements voll umfänglich in diese Öffnung eingreift. Zu diesem Zwecke können die freigeschnittenen Öffnungen in einer Tiefe in den Fuß des Trägerkörpers eingebracht sein, die größer ist als die Dicke der Basis des U-förmigen Halteelementes.

Die auf Vorspannung gehaltenen Seitenschenkel des U-förmigen Halteelementes erlauben eine begrenzte Bewegung dieser Seitenschenkel zur Mittelachse des U-Profils und erleichtern damit die Verbindung des U-förmigen Halteelementes mit der Profilleiste. Diese Verbindung erfolgt in der Form, daß zunächst die Basis des U-förmigen Halteelementes in die freigeschnittene Öffnung am Fuß des Trägerkörpers eingesetzt wird. Danach werden die Andruckschenkel der Profilleiste so weit hinter die flächigen Abkantungen an den freien Enden der Andruckschenkel verschwenkt, daß die Profilleiste wandseitig an der Nutenöffnung festgelegt werden kann. Sobald die Profilleiste durch Kraftanwendung von oben vollends in die Nutenöffnung eingedrückt wird, verschwenken die flächigen Abkantungen an den freien Enden der Andruckschenkel hinter die freien Enden der Haltestege des U-förmigen Halteelementes, wobei die Abmessungen zwischen den einzelnen Bauelementen so gewählt sind, daß am Ende des Eindrückvorgangs der Profilleiste in die Nutenöffnung über die Haltestege und die Andruckschenkel ein absolut fester Sitz der Profilleiste am Grund der Nutenöffnung gewährleistet ist. Die gegen die Eindrückrichtung während des Eindrückvorgangs bewegten Dichtlippen liegen nach Beendigung des Verschiebeweges dichtend an den zugeordneten Seitenwänden der Nutenöffnung an und verhindern, daß Wasser, Schmutz oder dergleichen bis zum Nutengrund gelangen können.

In der Zeichnung ist ein Ausführungsbeispiel der erfindungsgemäßen Profilleiste schematisch dargestellt; es zeigt:
Fig.1 die Profilleiste im Querschnitt
Fig.2 das U-förmige Halteelement im Querschnitt
Fig.3 die Profilleiste aus Fig.1 mit dem U-förmigen Halteelement aus Fig.2 im Einbauzustand.

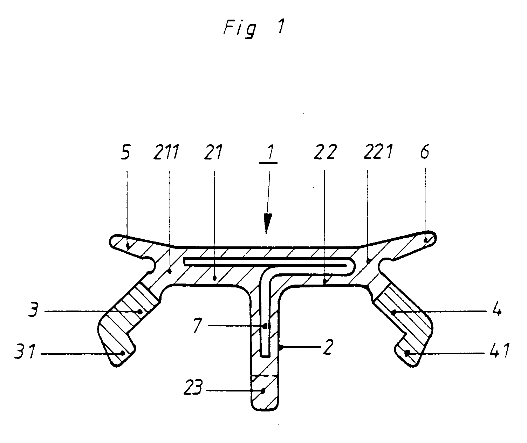

In Fig.1 ist die Profilleiste 1 im Querschnitt dargestellt. Der Basisbereich ist durch den T-förmigen Trägerkörper 2 gebildet, von dessen oberem freien Ende die Abdeckschenkel 21, 22 abragen. An den freien Enden 211, 221 der Abdeckschenkel 21, 22 sind die in Richtung zum Trägerkörper abgewinkelten Andruckschenkel 3, 4 angeformt, welche an ihren freien Enden in die flächigen Abkantungen 31, 41 auslaufen, die annähernd senkrecht von den Andruckschenkeln 3, 4 zum Trägerkörper 2 hin gerichtet sind. Die Andruckschenkel 3, 4 können aus hart eingestelltem Polymermaterial gebildet sein, während der Trägerkörper 2 mit den Abdeckschenkeln 21, 22 aus weich eingestelltem Polymermaterial gestaltet sein können.

In Gegenrichtung zu den Andruckschenkeln 3, 4 sind an den freien Enden 211, 221 der Abdeckschenkel 21, 22 die Dichtlippen 5, 6 angeformt. Diese Dichtlippen sind ebenfalls aus weich eingestelltem Polymermaterial gestaltet.

In den Querschnitt des Trägerkörpers 2 sowie der Abdeckschenkel 21, 22 ist ein metallisches Verstärkungsprofil 7 eingeformt, das während des Herstellungsverfahrens der Profilleiste im Wege der Extrusion einextrudiert werden kann.

Am freien Ende des Trägerkörpers 2 ist durch die gestrichelte Linie die Tiefe der freigeschnittenen Öffnung 23 am Fuß des Trägerkörpers 2 angedeutet.

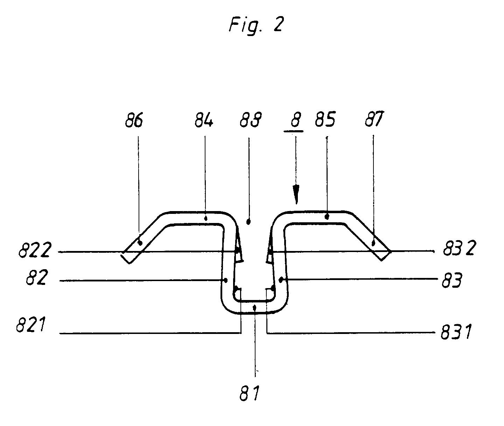

Figur 2 zeigt das U-förmige Halteelement 8 im Querschnitt. Dieses U-förmige Halteelement 8 besteht aus der Basis 81 und von dieser auf Vorspannung zueinander gerichteten Seitenschenken 82, 83. Die Seitenschenkel 82, 83 verlaufen in im wesentlichen senkrecht zur Mittelachse des Halteelementes 8 gerichtete Abstandsstege 84, 85, die wiederum an ihren freien Enden in Haltestege 86, 87 auslaufen.

Aus den Seitenflanken 821, 831 der Seitenschenkel 82, 83 sind in den lichten Aufnahmeraum 88 des Halteelementes 8 ragende rastenartige Vorsprünge 822, 832 aus- bzw. angeformt, welche in der Verbindung des Halteelementes 8 mit der Profilleiste 1 mit ihren Spitzen in den Trägerkörper 2 eindringen und dort das Halteelement 8 zusätzlich an der Profilleiste 1 festlegen.

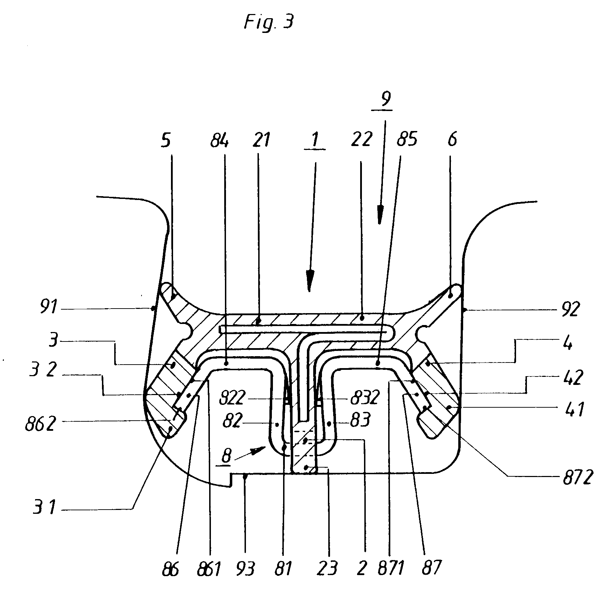

In Figur 3 ist die Profilleiste 1 und das Halteelement 8 im Einbauzustand dargestellt. Die Basis 81 des Halteelementes 8 befindet sich in der angedeuteten freigeschnittenen Öffnung 23 des Trägerkörpers 2. Die auf Vorspannung stehenden Seitenschenkel 82, 83 sind beidseitig über den Trägerkörper 2 geführt und die Rasten 822, 832 sind mit ihren Spitzen in den Trägerkörper 2 eingedrungen und legen das Halteelement 8 am Trägerkörper 2 fest. Die Abstandsstege 84, 85 verlaufen im wesentlichen parallel zu den Abdeckschenkeln 21, 22 des Trägerkörpers 2.

Die Haltestege 86, 87 liegen mit ihren Außenflächen 861, 871 an den Innenflächen 32, 42 der Andruckschenkel 3, 4 an. Die freien Enden 862, 872 der Haltestege 86, 87 hintergreifen die flächigen Abkantungen 31, 41 der Andruckschenkel 3, 4 und legen diese an den zugeordneten Wandbereichen 91, 92 der Nutenöffnung 9 fest.

Die Dichtlippen 5, 6 haben sich aufgrund ihrer materialimmanenten Elastizität während des Eindrückvorgangs aufgerichtet und liegen nunmehr mit ihrer materialimmanenten Elastizität an den zugeordneten Seitenwänden 91, 92 der Nutenöffnung 9 an.

Die Profilleiste 1 befindet sich damit in ihrem festen, unverrückbaren Sitz am Grund 93 der Nutenöffnung 9.

## Patentansprüche

1. Profilleiste aus polymerem Werkstoff zur dichtenden Überdeckung der Fugenöffnung von U-förmigen Baufugen an Kraftfahrzeugen, bestehend aus einem Basisbereich T-förmiger und von diesem im wesentlichen senkrecht abragenden Abdeckschenkeln (21, 22), dadurch gekennzeichnet, daß der Basisbereich ein T-förmiger Trägerkörper (2) ist, von dessen oberen freien Ende die im wesentlichen senkrecht zum Trägerkörper (2) abragenden Abdeckschenkel (21, 22) in einer Ebene verlaufen, daß an den freien Enden (211, 221) der Abdeckschenkel (21, 22) in Richtung zum Trägerkörper (2) abgewinkelte Andruckschenkel (3, 4) und in die Gegenrichtung zur Abwinkelung der Andruckschenkel (3, 4) verlaufende Dichtlippen (5, 6) angeformt sind, und daß am Fuß des Trägerkörpers (2) freigeschnittene Öffnungen (23) vorgesehen sind, in welche die Basis (81) von U-förmigen Halteelementen (8) eingreift, welche bestimmt sind, mit Haltestegen (86, 87), welche von an den Seitenschenkeln (82, 83) der Basis (81) abragenden Abstandsstegen (84, 85) verlaufen, flächige Abkantungen (31, 41) zu hintergreifen, die von den freien Enden der Andruckschenkel (3, 4) in Richtung zum Trägerkörper (2) abragen.

2. Profilleiste nach Anspruch 1, dadurch gekennzeichnet, daß das U-förmige Halteelement (8) aus der Basis (81) und von dieser aufragenden, auf Vorspannung zueinander gerichteten Seitenschenkeln (82, 83) besteht, daß an die Seitenschenkel (82, 83) im wesentlichen senkrecht zur Mittelachse des Halteelementes (8) abragende Abstandsstege (84, 85) angeformt sind, und daß die Abstandsstege (84, 85) an ihren freien Enden in Haltestege (86, 87) auslaufen, die in einem spitzen Winkel zur Achse der Abstandsstege nach unten verlaufen.

3. Profilleiste nach Ansprüchen 1 und 2, dadurch gekennzeichnet, daß sie über die Vorspannung des U-förmigen Halteelementes (8), die Abstandsstege (84, 85) und die Haltestege (86, 87) in der Fugenöffnung (9) festgelegt ist.

## Claims

1. Profile strip manufactured from polymer material for sealing and covering the mouths of U-shaped joints in motor vehicles, consisting of a stem (2) and covering structures (21,22) protruding essentially at right angles, characterised by the base being a T-shaped supporting stem (2) from the upper end of which the protruding covering structures (21, 22) run on one plane, essentially at right angles. On the outer ends (211, 221) of the covering structures (21, 22), there are moulded contact structures (3, 4) which are angled in the direction of the supporting stem (2) and, angled in the opposite direction, there are moulded sealing lips (5, 6). At the foot of the supporting stem (2) there are cut out openings (23) into which the base (81) of U-shaped retainers (8) engages. These retainers (8), plus retaining fins (86, 87) which protrude from the spacers (84, 85) projecting from the sides (82, 83) of the base (81), are designed to grip the bevelled edges (31, 41) projecting from the outer ends of the contact structures (3, 4) in the direction of the supporting stem (2).

2. Profile strip as in claim 1, characterised by the U-shaped retainer (8) being made up of a base (81) and sides (82, 83) projecting from it and pre-stressed towards each other, by having spacers (84, 85) moulded onto the sides (82, 83) and by the spacers (84, 85) ending at the outer ends in retaining fins (86, 87) running at a sharp angle to the spacer axis, downwards.

3. Profile strip as in claims 1 and 2, characterised by the fact that it is retained by the pre-stressed U-shaped retainer (8), the spacers (84, 85) and the retaining fins (86, 87) in the mouth of the joint (9).

## Revendications

1. Baguette en matière polymère pour recouvrir et réaliser l'étanchéité des ouvertures des joints en forme de U utilisés pour l'automobile, constituée d'une base (2) et de sections de recouvrement situées essentiellement perpendiculairement à cette base, caractérisée en ce que la base est un support en forme de T (2), les sections de recouvrement (21, 22) saillantes étant perpendiculaires sur un plan à l'extrémité libre du support (2), en ce qu'aux extrémités libres (211, 221) des sections de recouvrement (21, 22) des sections de pression repliées dans la direction du support (2) et des lèvres d'étanchéité (5,6) allant dans la direction opposée au repliement des sections de pression (3, 4) sont formées et en ce que des orifices découpés sont prévus dans le pied du support (2), dans lesquels vient s'imbriquer la base (81) des éléments de maintien en forme de U, lesquels sont destinés - à l'aide des tenons de maintien (86, 87), lesquels longent les entretoises (84, 85) dépassant des sections latérales (82, 83) de la base (81) - à saisir les arêtes dépassant des extrémités libres des sections de pression (3,4) dans la direction du support (2).

2. Baguette selon la revendication 1, caractérisée en ce que l'élement de maintien en forme de U (8) est constitué de la base (81) et de sections latérales dirigés l'un vers l'autre par précontrainte, en ce que sur les sections latérales (82, 83), essentiellement perpendiculairement à l'axe central de l'élément de maintien (8), des entretoises (84, 85) sont formées et en ce que les entretoises (84, 85) se terminent en leur extrémité libre en tenons de maintien (86, 87), allant vers le bas dans un angle aigu par rapport à l'axe des entretoises (84, 85).

3. Baguette selon les revendications 1 et 2, caractérisé en ce qu'elle est fixée par la précontrainte de l'élément de maintien en forme de U (8), les entretoises (84, 85) et les tenons de maintien (86, 87) dans l'ouverture du joint.
